# EUROPÄISCHE PATENTSCHRIFT

(11) **EP 3 625 521 B1**
(45) Veröffentlichungstag und Bekanntmachung des Hinweises auf die Patenterteilung: **23.11.2022**
(21) Anmeldenummer: 18724777.0
(22) Anmeldetag: 07.05.2018
(51) Int. Cl.: G01D 4/00, H04Q 9/00

(54) **VERFAHREN ZUM BETRIEB EINES VERSORGUNGSSYSTEMS**
METHOD FOR OPERATING A SUPPLY SYSTEM
PROCÉDÉ SERVANT À FAIRE FONCTIONNER UN SYSTÈME D'ALIMENTATION

(30) Priorität: 20.05.2017 DE 102017004888
(43) Veröffentlichungstag der Anmeldung: 25.03.2020
(73) Patentinhaber: Diehl Metering Systems GmbH, 90451 Nürnberg (DE)
(72) Erfinder: PETKOV, Hristo, 90425 Nürnberg (DE); TRÄNKLER, Michael, 91186 Büchenbach (DE); KAUPPERT, Thomas, 90455 Nürnberg (DE); MEYER, Benjamin, 90419 Nürnberg (DE)
(74) Vertreter: Diehl Patentabteilung
(86) Internationale Anmeldenummer: PCT/EP2018/000242
(87) Internationale Veröffentlichungsnummer: WO 2018/215089

(56) Entgegenhaltungen:
- FR-A1- 2 997 759
- US-A1- 2011 140 909
- US-A1- 2016 080 837

## Beschreibung

Die vorliegende Erfindung betrifft ein Verfahren zum Betrieb eines Versorgungssystems, insbesondere eines Verbrauchszählersystems, gemäß dem Oberbegriff des Anspruchs 1 sowie je ein Verfahren zum Betrieb eines Versorgungssystems nach den nebengeordneten Ansprüche 2 bis 4.

### Technologischer Hintergrund

Die Daten- oder Informationsübertragung von Messeinheiten, wie z. B. Sensoren, Verbrauchsmessgeräten oder Komponenten von Smart-Home-Steuerungen, gewinnt zunehmend an Bedeutung. Hierbei können vor allem Geräte des täglichen Gebrauchs, wie z. B. Tore, Lampen, Kaffeemaschine, Jalousien, intelligent, d. h. automatisch und effizient, gesteuert werden und damit den Anwender unmerklich unterstützen. Ferner können z. B. Intervalls-bedingte Wartungen automatisch vereinbart und entsprechende Verbrauchsmaterialien automatisch bestellt werden, wie z. B. die automatische Druckerpatronenbestellung. Hierzu verfügen diese "intelligenten Messeinheiten" über Kommunikationsmodule, die z. B. über Funk mit anderen Messeinheiten, Geräten, Schaltzentralen, dem Internet oder einer Internet-ähnlichen Struktur, wie dem Internet der Dinge (Internet of Things; kurz IoT) kommunizieren.

Ein wichtiger Anwendungsbereich von intelligenten Messeinheiten ist hierbei der Einsatz von intelligenten Verbrauchsmessgeräten, auch Smart Meter genannt. Derartige Verbrauchsmessgeräte sind üblicherweise jeweils Wohn-, Industrie- oder Gewerbeeinheiten zugeordnete und in ein Versorgungsnetz eingebundene Verbrauchsmessgeräte, z. B. für Wärme, Strom, Gas, Wasser. Die intelligenten Verbrauchsmessgeräte zeigen dem jeweiligen Anschlussbenutzer den tatsächlichen Verbrauch an und übermitteln diesen an eine übergeordnete Zentraleinheit, z. B. die Steuerzentrale des Versorgers, einen Datensammler, einen Konzentrator oder dergleichen. Daher haben die intelligenten Verbrauchsmessgeräte den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Die anfallenden Messdaten werden in der Regel in Form von Datenpaketen oder Telegrammen per Funk, beispielsweise im ISM (Industrial, Scientific, Medical)-Band- oder SRD (Short Range Devices oder Kurzstreckenfunk)-Band-Frequenzbereich an übergeordnete Datensammler z. B. Konzentratoren übertragen. Bei diesen Frequenzbereichen besteht das Problem, dass aufgrund der Häufigkeit der Verwendung derartiger Frequenzbereiche für unterschiedlichste technische Einrichtungen, wie etwa Garagentorsteuerungen, Babyphones, Alarmanlagen, WLAN, Bluetooth, Rauchwarnmelder oder dergleichen, es häufig zu Störungen kommen kann.

Zunehmend werden die intelligenten Verbrauchsmessgeräte über Kommunikationsnetze per Funk ferngesteuert, z. B. von der Steuerzentrale des Versorgers aus. Dadurch können beispielsweise Strom- oder Wasserabschaltungen vorgenommen werden, ohne dass Servicepersonal vor Ort benötigt wird. Hierzu werden beispielsweise Trennvorrichtungen, sogenannte "Breaker", eingesetzt, über den die Zufuhr des Versorgungsmediums unterbrochen werden kann.

Ferner ist die Energieeffizienz bei den gattungsgemäßen Verbrauchsmessgeräten von großer Bedeutung, da heutige Verbrauchsmessgeräte in der Regel batteriebetrieben sind und möglichst lange Wartungsintervalle aufweisen sollten. Häufige Datensendungen sowie vermehrte Empfangsbereitschaftszeiten, sogenannte Empfangsfenster, verkürzen die Batteriedauer immens, verbessern jedoch die Übertragungssicherheit, die gerade in Notfällen, wie z. B. bei einer Stromabschaltung, einem Leitungsschaden oder einem Rohrbruch, gewährleistet sein muss. Hierbei wird in der Regel ein Kompromiss gewählt, bei dem eine gerade noch ausreichende Sende- und Empfangsbereitschaftszeit gewählt wird, die in energetischer Hinsicht noch akzeptabel erscheint. Dementsprechend besteht ein großes Interesse daran, die Übertragungssicherheit gerade in Notfällen ohne vergrößerten Energiebedarf zu verbessern.

### Druckschriftlicher Stand der Technik

Die DE 10 2010 019 376 A1 beschreibt ein Verfahren zur Versorgung eines Stromverbrauchers, der an einen Stromzähler angeschlossen ist. Der Stromzähler weist hierbei eine Kommunikationsschnittstelle auf, über die er die Zählerdaten an eine rechnergestützte Zentraleinheit eines Energieversorgers übermitteln kann und mit weiteren Stromzählern kommunizieren kann. Die Kommunikation zwischen Stromzähler und Zentraleinheit erfolgt hierbei draht- oder drahtungebunden, z. B. via DSL oder Powerline. Der Stromzähler wird über eine kabelgeführte Stromversorgung mit Energie versorgt. Die Zentraleinheit übermittelt dem Stromzähler Daten zur Freigabe oder Unterbrechung der Stromabgabe. Der Stromzähler ist hierzu mit einer Trennvorrichtung verbunden, mittels der die Stromabgabe unterbrochen oder freigegeben werden kann. Die Kommunikation zwischen Stromzähler und Zentraleinheit kann hierbei dauerhaft durchgeführt werden, sodass eine gute Übertragungssicherheit besteht, wobei jedoch ein hoher Energieverbrauch die Folge ist. Der Stromzähler hat hierbei den Nachteil, dass er dadurch über eine kabelgebundene Stromversorgung versorgt werden muss. Dadurch ergeben sich Nachteile bei der Installation. Auch führen Stromausfälle dazu, dass der Verbrauch nicht mehr erfasst werden kann und auch keine Daten an die Zentraleinheit übermittelt werden können.

Die US 2016/0080837 A1 betrifft ein Verfahren zur Bestimmung eines "Endpunkts von Interesse" durch einen mobilen Datensammler per Funkübertragung aus einer größeren Anzahl von Endpunkten, bei denen es sich um lokal unterschiedlich positionierte Verbrauchszähler eines Funknetzwerks handelt. Jeder Endpunkt geht zu bestimmten Zeitpunkten aus einem Sleepmodus in einen Sendemodus und versendet seine Zählerdaten. Sobald der Datensammler in die Reichweite des zu bestimmenden Verbrauchszählers kommt, übermittelt der Datensammler einen Befehl zur Verkürzung der Anzahl der Zeitpunkte, zu denen der Datensammler aus dem Sleepmodus in den Sendemodus gehen soll, um anhand der verkürzten Übertragungen der Zählerdaten des betreffenden Verbrauchszählers feststellen zu können, ob der Verbrauchszähler ein "Endpunkt von Interesse" ist oder nicht. Nach der endgültigen Feststellung sendet der Datensammler einen erneuten Befehl, damit der Verbrauchszähler wieder in den vorherigen Sendetakt übergeht.

Aus der FR 2 997 759 A1 ist ein intelligentes auf Funk basierendes Fernablesenetzwerk für Verbrauchszähler bekannt. Das Netzwerk umfasst eine Vielzahl von Verbrauchszähler sowie eine Informationszentrale, wobei das Einsammeln von Daten der Verbrauchszähler über permanent in einem Empfangszustand befindliche Datensammler erfolgt, die mit einer begrenzten Anzahl von Verbrauchszählern kommunizieren können. Werden von der Informationszentrale über einen Datensammler die Daten von mehr als einer vorgegebenen Menge von Verbrauchszählern empfangen, sendet die Informationszentrale über den betreffenden Datensammler einen Befehl an mindestens einen bestimmten dieser Verbrauchszähler, damit dieser seine Sendeleistung reduziert. Hierdurch kann über die Informationszentrale die Menge der von dem betreffenden Datensammler empfangbaren Verbrauchszähler gesteuert werden.

Die US 2011/0140909 A1 betrifft eine Anordnung sowie ein Verfahren zur Ersteinrichtung einer Kommunikation zwischen einem Verbrauchszähler und einem Gateway. Um einen Verbrauchszähler unter Berücksichtigung der individuellen Gegebenheiten optimal anzupassen, übermittelt der Verbrauchszähler in einer ersten Nachricht Funksignale für den Empfang durch den Gateway. Sofern Letzterer die Funksignale nicht empfängt, wiederholt der Verbrauchszähler die Sendung ein- oder mehrmals. Empfängt der Gateway diese erneuten Funksignale wiederum nicht, werden die Funksignale mit erhöhter Sendeleistung übermittelt. Sobald der Gateway die Funksignale empfangen hat, versendet er ein Acknowledgement-Signal sowie gegebenenfalls zusammen mit einem Kommando zur Anpassung der Sendeleistung an den Verbrauchszähler.

### Aufgabe der vorliegenden Erfindung

Die Aufgabe der vorliegenden Erfindung besteht darin, ein Verfahren zum Betrieb eines Verbrauchszählersystems zur Verfügung zu stellen, bei welchem die Übertragungssicherheit bei gleichbleibender Energieeffizienz verbessert wird.

### Lösung der Aufgabe

Die vorstehende Aufgabe wird durch die gesamte Lehre des Anspruchs 1 sowie durch das jeweilige Verfahren der nebengeordneten Ansprüche 2 bis 4 gelöst. Zweckmäßige Ausgestaltungen der Erfindung sind in den Unteransprüchen beansprucht.

Erfindungsgemäß werden durch den Eintritt eines ersten Auslöseereignisses, wie z. B. ein Notfall im Bereich des Versorgungsnetzes, die Zeitabstände zwischen den Sendewiederholungen der Information verkürzt und/oder die Zentraleinheit öffnet mindestens ein zusätzliches Empfangsfenster, welches zum Empfang der Empfangsbestätigung der Messeinheit dient. Dadurch kann die Sendehäufigkeit und die Empfangsbereitschaftszeit der Kommunikationsmodule erhöht werden. Beispielsweise kann dadurch ein Notfall-Sendeprogramm zur Verfügung gestellt werden, durch welches beim Eintritt des Notfalls bzw. des (ersten) Auslöseereignisses die Übertragungssicherheit verbessert wird, bei dem die Sendehäufigkeit (bzw. die Sendewiederholungen) z. B. bis zum Erreichen des größtmöglichen Tastgrades auf der jeweiligen Frequenz erhöht wird. Ferner werden durch den Eintritt eines zweiten Auslöseereignisses die Zeitabstände zwischen den Datensendungen wieder verlängert und/oder keine zusätzlichen Empfangsfenster mehr geöffnet, d. h. die Sendehäufigkeit und/oder die Empfangsbereitschaftszeit wird nach dem Eintritt des zweiten Auslöseereignisses, welches z. B. eine Behebung des Notfalls signalisiert, wieder herabgesetzt bzw. normalisiert. Daraus resultiert der Vorteil, dass die Erhöhung der Sendehäufigkeit und/oder Empfangsbereitschaftszeit nur solange aufrechterhalten wird bis das die Erhöhung verursachende Ereignis geheilt ist. Demnach wird die Übertragungssicherheit für die Dauer des Notfalls zeitweise erhöht und nach erfolgter Übertragung wieder verringert, um Energie zu sparen.

Nebengeordnet beansprucht die vorliegende Erfindung ein Verfahren bei dem durch den Eintritt des ersten Auslöseereignisses die Sendeleistung zum Senden der Information verringert und aufgrund des Eintritts des zweiten Auslöseereignisses wieder erhöht wird. In vorteilhafter Weise kann dadurch z. B. das Sendeintervall erhöht und gleichzeitig die Sendeleistung verringert. Dadurch kann die Sendeanzahl pro Zeit erhöht werden, wobei der Stromverbrauch auf Kosten der Sendeleistung reduziert werden kann. Dadurch kann der Stromverbrauch auch nach Eintritt des ersten Auslöseereignisses (d. h. auch während erhöhter Sendehäufigkeit) konstant gehalten oder gar verringert werden.

Zweckmäßigerweise kann das zweite Auslöseereignis durch den Empfang der Empfangsbestätigung einer Messeinheit durch die Zentraleinheit und/oder das Auslösen eines Timers und/oder die erfolgreiche Verbindung zu einem externen Übertragungssystem (z. B. Funksystem, Netzwerk oder dergleichen) definiert sein. Hierbei ist anzunehmen, dass das die Veränderung, d. h. Erhöhung oder Verringerung, der Sendehäufigkeit und/oder Empfangsbereitschaftszeit und/oder Sendeleistung verursachende (erste) Auslöseereignis durch die erfolgreiche Informationsübertragung und der Einleitung geeigneter Maßnahmen, wie z. B. das Einschalten der Stromversorgung durch das Abschalten der Breaker-Funktion, behoben worden ist.

Alternativ oder zusätzlich kann eine Zeitsteuerung bzw. eine Countdown-Funktion vorgesehen sein, wobei die Zeitsteuerung mit dem Eintritt des ersten Auslöseereignisses gestartet wird und z. B. nach einer festlegbaren Zeitdauer beendet wird bzw. abläuft. In vorteilhafter Weise kann der Ablauf der Zeitsteuerung bzw. des Countdowns das zweite Auslöseereignis darstellen, sodass das Verkürzen der Zeitabstände zwischen den Sendewiederholungen und/oder das Öffnen zusätzlicher Empfangsfenster für die durch die Zeitsteuerung festlegbare Zeitdauer durchgeführt wird, indem das zweite Auslöseereignis automatisch mit dem Ablauf der festlegbaren Zeitdauer nach dem ersten Auslöseereignis eintritt. Ferner können die Messeinheiten und/oder die Zentraleinheit derart konfiguriert sind, dass diese über mehrere Funksysteme und/oder mehrere Frequenzkanäle senden und empfangen können. Beispielsweise kann die Messeinheit eine robuste Technologie für das Senden zur Zentraleinheit verwenden (Uplink) und für das Senden der Empfangsbestätigung durch die Zentraleinheit (Downlink) die Technologie mit der besten Übertragungsempfindlichkeit. Alternativ oder zusätzlich können die sendenden Einheiten die Information auch in Form von kürzeren Datenpaketen über jeweils verschiedene Frequenzkanäle senden.

Für den Fall, dass mehrere Funksysteme zur Informationsübertragung verwendet werden, kann z. B. bevorzugt über das Funksystem mit der höchsten Reichweite und/oder stärksten Fehlerkorrekturfähigkeit, d. h. das robusteste Funksystem, übertragen werden. Anhand der Daten der Messeinheit und der Zentraleinheit kann hierbei eine Statistik erstellt werden, z. B. über die jeweiligen Signal-zu-Rausch-Verhältnisse (SNR), Nutzsignal-zu-Störsignal-Verhältnisse (SIR), die Übertragungszuverlässigkeit bzw. Störanfälligkeit des Funksystems oder dergleichen, die zu einer Bewertung des jeweiligen Funksystems herangezogen wird. Dementsprechend kann bevorzugt das Funksystem verwendet werden, welches die für die jeweilige Übertragungssituation am besten geeignete Bewertung besitzt.

Erfindungsgemäß kann die Sendeleistung zum Senden der Information aufgrund des Eintritts des ersten Auslöseereignisses erhöht und aufgrund des Eintritts des zweiten Auslöseereignisses wieder verringert werden. Beispielsweise kann hierbei eine möglichst große Sendeleistung kurzzeitig aktiviert werden, z. B. eine Erhöhung der Sendeleistung von 10 dBm auf 14 dBm, um die Auswirkung von Störern oder Störeinflüssen zu verringern, indem die Signalstärke erhöht wird.

Erfindungsgemäß kann die Zeitdauer des oder der Empfangsfenster(s) aufgrund des Eintritts des ersten Auslöseereignisses erhöht und aufgrund des Eintritts des zweiten Auslöseereignisses wieder verringert werden. Durch die Erhöhung der Zeitdauer der Empfangsfenster können Zeitunterschiede der sendenden und der empfangenden Einheit bzw. deren jeweilige Zeitmessinstrumente ausgeglichen werden.

Vorzugsweise erfolgt das Verkürzen der Zeitabstände zwischen den Sendewiederholungen und/oder das Öffnen zusätzlicher Empfangsfenster und/oder das Verändern, insbesondere Erhöhen oder Verringern, der Sendeleistung und/oder der Zeitdauer des Empfangsfensters nur für die Zeitdauer eines bestimmten Sendezeitraums mit erhöhter Sendewiederholung zwischen dem ersten und zweiten Auslöseereignis. Dadurch kann noch zusätzlich Energie eingespart werden.

Ferner können zwischen dem Eintritt des ersten Auslöseereignisses und dem Eintritt des zweiten Auslöseereignisses mehrere Sendezeiträume mit erhöhter Sendewiederholung vorgesehen sein und zwischen den Sendezeiträumen mit erhöhter Sendewiederholung Sendepausen und/oder Sendezeiträume ohne erhöhte Sendewiederholung vorgesehen sein. Dadurch können Sendeschemas realisiert werden, durch die z. B. ansteigende Sendehäufigkeiten oder Intervallsendungen ermöglicht werden können. Die Übertragungssicherheit wird dadurch noch weiter verbessert.

Zweckmäßigerweise kann die Zentraleinheit und/oder die Messeinheiten eine Frequenzkanalauswahl zur Informationsübertragung durchführen. Hierbei können die Frequenzkanäle für die Informationsübertragung ausgewählt werden, die eine möglichst gute Informationsübertragung aufweisen. Dadurch wird die Übertragungssicherheit noch zusätzlich verbessert.

Vorzugsweise führen die Messeinheiten und/oder die Zentraleinheit eine Frequenzkanalbewertung anhand des Signal-zu-Rausch-Verhältnisses (SNR) und/oder anhand des Nutzsignal-zu-Störsignal-Verhältnisses (SIR) durch, indem diese z. B. die Signalstärke während der Informationsübertragung erfassen und diese in Relation zu der Signalstärke außerhalb der Informationsübertragung setzen. In vorteilhafter Weise kann diese Frequenzkanalbewertung anschließend zur Frequenzkanalauswahl herangezogen werden.

Ferner kann eine Lookup-Tabelle vorgesehen sein, in welcher Erwartungswerte für bestimmte Parameter hinterlegt werden können, die aus bereits übermittelten Informationen ableitbar sind. Die Lookup-Tabelle wird hierbei zur Überprüfung der Parameterdaten herangezogen. Beispielsweise kann dabei eine bestimmte Abweichung der übermittelten Information bzw. der Parameterdaten von den Erwartungswerten der Lookup-Tabelle ein erstes Auslöseereignis darstellen.

Zweckmäßigerweise kann der Zeitabstand zwischen dem ersten Auslöseereignis und dem Beginn der Übertragung der Information festgelegt werden. Alternativ oder zusätzlich können auch die verkürzten Zeitabstände anhand eines definierten Musters oder pseudo-zufällig festgelegt werden. Beispielsweise können die verkürzten Zeitabstände durch eine PRB (pseudo random, binary)-Sequenz oder ein Sendemuster mit z. B. definierten Sendezeiten festgelegt werden. Praktischerweise werden die Zeitabstände zwischen Sendewiederholungen nach dem Eintritt des zweiten Auslöseereignisses wieder verlängert, d. h. die Festlegung dieser erfolgt nach dem Eintritt des zweiten Auslöseereignisses auch nicht mehr anhand eines definierten Musters oder pseudo-zufällig.

Gemäß einer bevorzugten Ausgestaltung der vorliegenden Erfindung sind innerhalb des Kommunikationsnetzes eine Vielzahl von Messeinheiten bzw. Verbrauchsmessgeräten und/oder Zentraleinheiten bzw. Datensammlern oder Konzentratoren vorgesehen.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte schematische Darstellung eines Kommunikationssystems, welches mehrere Verbrauchsmessgeräte und eine Zentraleinheit umfasst;
- Fig. 2: eine vereinfachte schematische Darstellung von Wohneinheiten mit Verbrauchsmessgeräten und eine Zentrale eines Versorgers, die innerhalb eines Kommunikationssystems eine Information übertragen;
- Fig. 3: eine vereinfachte schematische Darstellung von aufeinanderfolgenden Informationsendungen eines Verbrauchsmessgerätes gemäß dem Stand der Technik;
- Fig. 4: eine vereinfachte schematische Darstellung von aufeinanderfolgenden Informationsendungen eines Verbrauchsmessgerätes gemäß der vorliegenden Erfindung;
- Fig. 5: eine zweite vereinfachte schematische Darstellung von aufeinanderfolgenden Informationsendungen eines Verbrauchsmessgerätes gemäß der vorliegenden Erfindung;
- Fig. 6: eine vereinfachte schematische Darstellung einer Informationsendung eines Verbrauchsmessgerätes mit zugeordneten Empfangsfenstern gemäß der vorliegenden Erfindung;
- Fig. 7: eine dritte vereinfachte schematische Darstellung von aufeinanderfolgenden Informationsendungen eines Verbrauchsmessgerätes gemäß der vorliegenden Erfindung;
- Fig. 8: eine vierte vereinfachte schematische Darstellung von aufeinanderfolgenden Informationsendungen eines Verbrauchsmessgerätes gemäß der vorliegenden Erfindung;
- Fig. 9: eine vereinfachte schematische Darstellung des erfindungsgemäßen Verfahrensablaufs von aufeinanderfolgenden Informationssendungen eines Kommunikationsmoduls, sowie
- Fig. 10: eine weitere vereinfachte schematische Darstellung des erfindungsgemäßen Verfahrensablaufs von aufeinanderfolgenden Informationssendungen eines Kommunikationsmoduls.

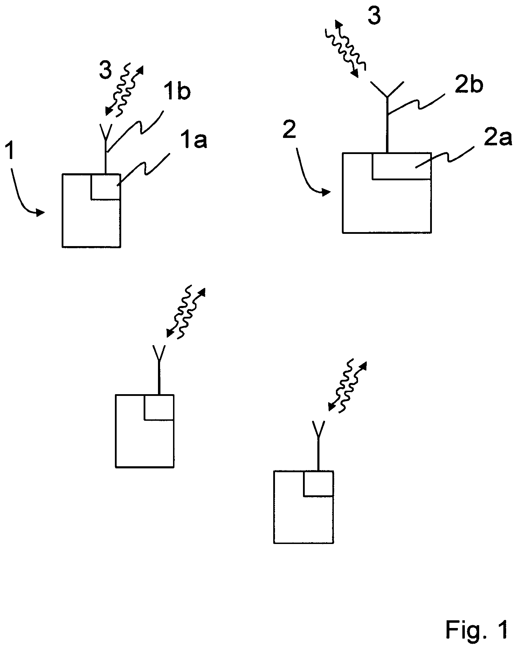

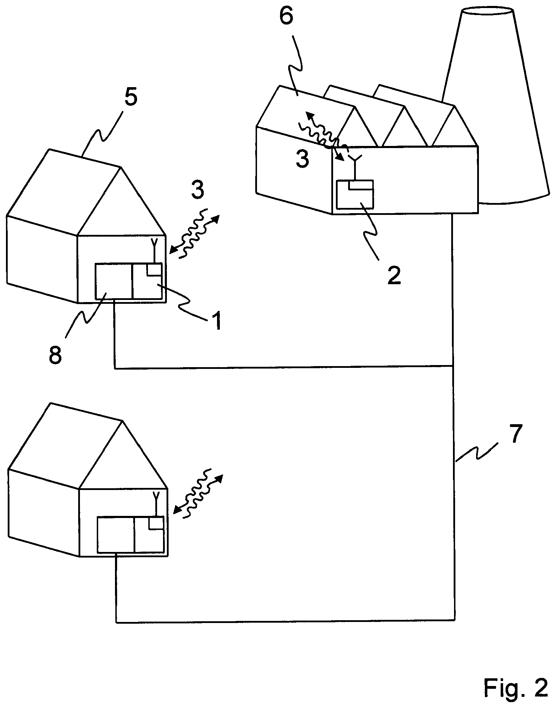

Fig. 1 zeigt eine Ausgestaltung eines per Funk betriebenen Kommunikationssystems, zwischen mehreren Messeinheiten und einer Zentraleinheit 2. Bei den Messeinheiten handelt es sich um Verbrauchszähler bzw. Verbrauchsmessgeräte 1, die dazu vorgesehen sind, den aktuellen Strom-, Wasser- oder Wärmemengenverbrauch zu ermitteln. Die Verbrauchsmessgeräte 1 können beispielsweise, wie in Fig. 2 gezeigt, einzelnen Gewerbe-, Industrie- oder Wohneinheiten 5 zugeordnet sein, bzw. sich innerhalb dieser befinden. Die Verbrauchsmessgeräte 1 übermitteln die ermittelten Verbrauchsdaten an die übergeordnete Zentraleinheit 2, wie z. B. einem Datensammler innerhalb einer Schaltzentrale 6 des Versorgers. Die Schaltzentrale 6 versorgt die Wohneinheiten 5 über eine Versorgungsleitung 7 mit dem Versorgungsmedium, z. B. Wasser, Strom, Gas oder dergleichen.

Die Verbrauchsmessgeräte 1 umfassen jeweils ein Kommunikationsmodul 1a mit einer Antenne 1b zum Senden und Empfangen von Informationen 3, wie z. B. Verbrauchs- oder Programmdaten. Ferner kann die Zentraleinheit 2 Informationen 3, wie z. B. Steueranweisungen zum Abschalten, Einschalten, Steuern und Regeln der Verbrauchsmessgeräte 1, z. B. als kurzes Signal bzw. Beacon oder in Form von Datenpaketen bzw. mehrere Datenpakete umfassenden Telegrammen über das Kommunikationssystem an die Verbrauchsmessgeräte 1 senden. Die Informationsübertragung im Kommunikationssystem erfolgt in der Regel über Funk, insbesondere über die SRD- oder ISM-Bänder. Hierzu umfasst die Zentraleinheit 2 ebenfalls ein Kommunikationsmodul 2a und eine Antenne 2b zum Senden und Empfangen der Informationen 3. Zum Ein- und Abschalten der Versorgung der einzelnen Wohneinheiten 5 ist dem jeweiligen Verbrauchsmessgerät 1 ein Breaker 8 zugeordnet, der dazu hergerichtet ist, eine ferngeschaltete Kundenseparation zu ermöglichen, d. h. die jeweilige Wohneinheit 5 von der Versorgung zu trennen und/oder diese zu verbinden.

Der Breaker 8 kann beispielsweise verwendet werden, um die entsprechende Wohneinheit 5 im Falle eines eintretenden Auslöseereignisses (z. B. erstes Auslöseereignis EA1) von der Versorgung mit Versorgungsmedium (z. B. Strom, Wasser, Wärme oder dergleichen) zu trennen. Für den Fall, dass ein erstes Auslöseereignis EA1 eingetreten ist, soll in der Regel eine möglichst schnelle Ein- oder Abschaltung der Versorgung durchgeführt werden. Hierzu wird eine hohe Übertragungssicherheit benötigt, wodurch gewährleistet wird, dass die Information einer durchzuführenden Ein- oder Abschaltung sicher übertragen wird. Das erste Auslöseereignis EA1 kann beispielsweise ein in der Schaltzentrale 6 des Versorgers festgestellter Versorgungsengpass sein, bei dem im Zuge des Lastenmanagements einzelne Wohneinheiten 5 vorübergehend von der Versorgung getrennt werden müssen. Ferner könnte z. B. ein Vertragswechsel des Verbrauchers oder eine mangelhafte Zahlungsmoral des Verbrauchers eine gewünschte Versorgungsunterbrechung seitens des Versorgers bedingen. Zudem kann auch eine Leckage im Versorgungssystem bzw. im Bereich der Versorgungsleitung 7 ein erstes Auslöseereignis EA1 darstellen, welches die Versorgungsabschaltung einer oder mehrerer Wohneinheiten 5 zur Folge hat. Hierbei spielt die Übertragungssicherheit für die Informationsübertragung von der Zentraleinheit 2 zur Messeinheit sowie von der Messeinheit zur Zentraleinheit 2 eine wichtige Rolle.

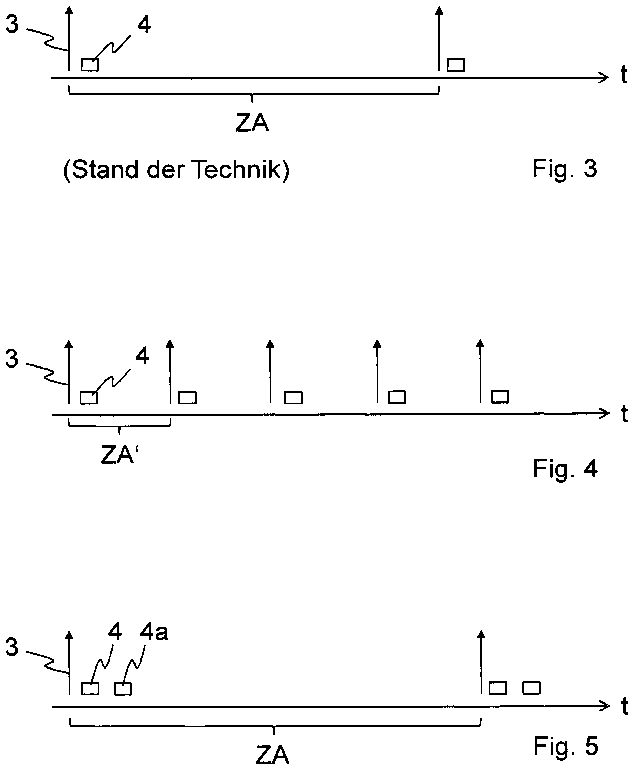

In Fig. 3 ist eine Sendeabfolge einer Information 3 zwischen einer Messeinheit und einer Zentraleinheit 2 gemäß des Standes der Technik dargestellt. Die Information 3 wird hierbei in bestimmten Zeitabständen ZA mehrfach übermittelt. Beispielsweise versucht die Zentraleinheit 2 die Information 3, die das Abschalten der Versorgung einer Wohneinheit 5 bzw. das Schalten des Breakers 8 beinhaltet, an das Verbrauchsmessgerät 1 zu übermitteln, um die Versorgung dieser Wohneinheit 5 nach dem Eintritt eines ersten Auslöseereignisses EA1 über Funk abzuschalten. Im Anschluss daran öffnet die Zentraleinheit 2 ein Empfangsfenster 4 zum Empfangen einer Empfangsbestätigung des Verbrauchsmessgerätes 1, die das Verbrauchsmessgerät 1 nach dem Empfang der Information 3 generiert und an die Zentraleinheit 2 sendet. Dieser Sendevorgang wiederholt sich, bis das Verbrauchsmessgerät 1 die Information 3 empfangen hat und diese durch die Empfangsbestätigung bestätigt hat.

Das erfindungsgemäße Verfahren sieht nun vor, wie in Fig. 4 gezeigt, die Zeitabstände ZA durch den Eintritt eines ersten Auslöseereignisses EA1 zwischen den Sendewiederholungen der Information 3 zu verkürzen, sodass im Vergleich zum normalen Sendemodus mehrere Informationssendungen pro Zeit durchgeführt werden. Durch das vermehrte Senden der Information 3 wird der Energieverbrauch kurzzeitig erhöht. Aufgrund dessen werden durch den Eintritt eines zweiten Auslöseereignisses EA2, z. B. der Empfang der Empfangsbestätigung, die Zeitabstände ZA' zwischen den Sendewiederholungen wieder verlängert. Die Sendezeitpunkte müssen hierbei nicht starr vorgegeben sein, sondern können flexibel z. B. mittels eines Generators variiert werden. Ebenso können auch die Zeitabstände ZA' variieren, z. B. derart, dass sich diese von Sendewiederholung zu Sendewiederholung immer weiter verkürzen, bis die Information erfolgreich übertragen worden ist.

Alternativ oder zusätzlich sieht das erfindungsgemäße Verfahren vor, wie in Fig. 5 dargestellt, durch den Eintritt eines ersten Auslöseereignisses EA1 mindestens ein zusätzliches Empfangsfenster 4a zum Empfangen der Empfangsbestätigung zu öffnen. Dadurch wird die Wahrscheinlichkeit des Empfangs der Empfangsbestätigung vergrößert. Ferner wird auch mit dem Eintritt des zweiten Auslöseereignisses EA2 das Öffnen zusätzlicher Empfangsfenster 4a wieder eingestellt.

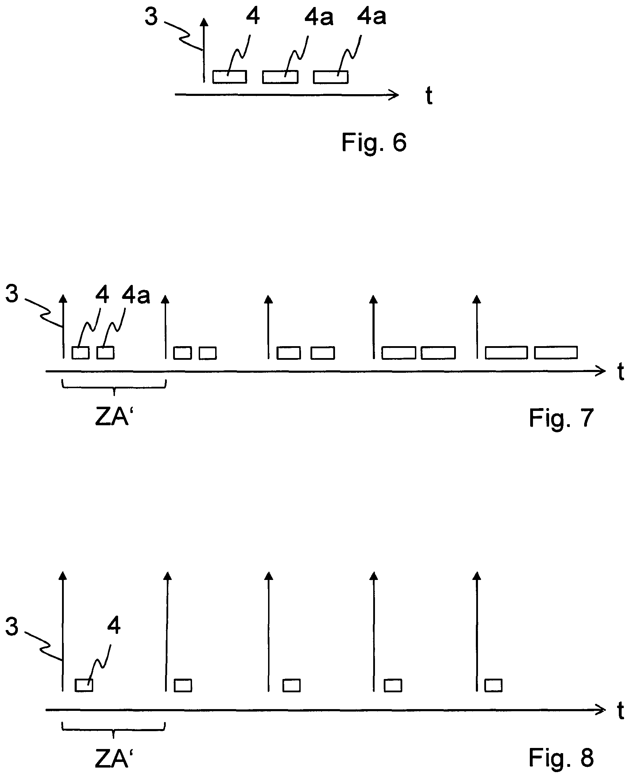

Gemäß Fig. 6 können auch mehrere zusätzliche Empfangsfenster 4a vorgesehen sein. Zudem kann die Zeitdauer der Empfangsfenster variiert werden, sodass die Empfangsfenster 4a z. B. zwischen dem Eintritt des ersten Auslöseereignisses EA 1 und des zweiten Auslöseereignisses EA2 länger sind. Alternativ oder zusätzlich können die Empfangsfenster 4 sowie die zusätzlichen Empfangsfenster 4a auch eine variierende Zeitdauer aufweisen, die beispielsweise, wie in Fig. 7 dargestellt, von Informationssendung zu Informationssendung ansteigt, d. h. die Empfangsfenster werden länger.

Zweckmäßigerweise kann es auch gemäß Fig. 8 vorgesehen sein, die Sendeleistung der Informationssendungen zu erhöhen, z. B. von 10 dBm auf 14 dBm. Dies dient beispielsweise dazu, dass Störer, die auf den gleichen Frequenzkanälen senden, ausgeblendet werden können bzw. deren Übertragungsbeeinträchtigungen verringert werden. Logischerweise wird hierdurch das Untergrundrauschen auf den jeweiligen Frequenzkanälen ebenfalls größer. Zudem erhöht sich der Stromverbrauch während der Informationssendung. Jedoch kann dadurch die Übertragungssicherheit kurzzeitig gesteigert werden, indem die Signalstärke erhöht wird.

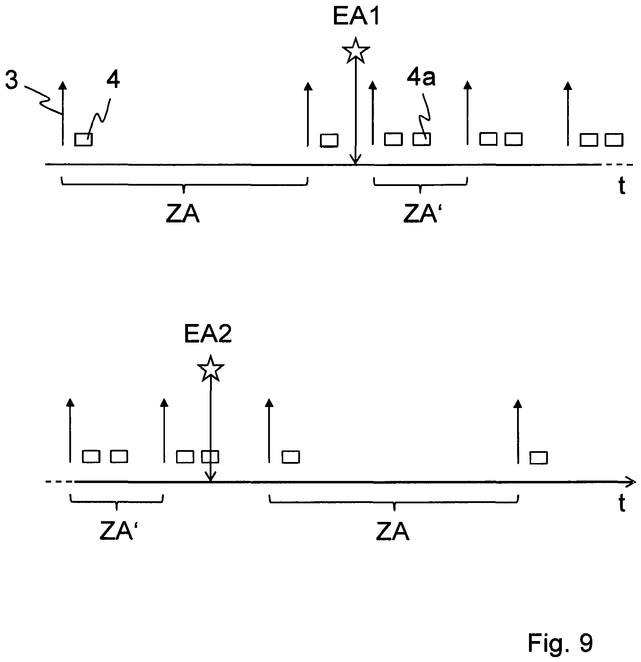

In Fig. 9 ist eine Ausgestaltung eines erfindungsgemäßen Sendungsablaufes einer Information 3 zwischen einer Messeinheit und einer Zentraleinheit 2 in zeitlicher Abhängigkeit grafisch dargestellt. Hierbei wird die Information 3 zunächst von der Messeinheit an die Zentraleinheit 2, wie z. B. ein Warnsignal, und/oder von der Zentraleinheit 2 zum Verbrauchsmessgerät 1, wie z. B. Programmaktualisierungsdaten, Steuerdaten oder dergleichen, übermittelt. Im Anschluss an die Informationssendung öffnet die sendende Einheit ein Empfangsfenster 4, welches dazu dient, eine Empfangsbestätigung der empfangenden Einheit empfangen zu können. Diese Informationssendungen werden in bestimmten Zeitabständen ZA zueinander wiederholt.

Beispielsweise handelt es sich bei der Messeinheit um einen Wasserzähler, der einen plötzlich auftretenden, hohen Wasserverbrauch erfasst, welcher z. B. auf einen Rohrbruch hinweist und somit ein erstes Auslöseereignis EA1 darstellt. Dabei wird zunächst eine erhöhte zählerseitige Übertragungssicherheit benötigt. Der Wasserzähler kann die Information 3, d. h. ein generiertes Warnsignal oder den aktuellen Wasserverbrauch, an die Zentraleinheit 2 des Versorgers übermitteln. Um die Übertragungssicherheit zu erhöhen, werden die Zeitabstände ZA zwischen den Sendewiederholungen nach dem Eintritt des ersten Auslöseereignisses EA1 zu Zeitabständen ZA' verkürzt. Zudem öffnet der Wasserzähler mit dem Eintritt des ersten Auslöseereignisses EA1 zusätzliche Empfangsfenster 4a. Nach dem Empfang der Information 3 durch die Zentraleinheit 2 generiert die Zentraleinheit 2 eine Empfangsbestätigung und sendet diese an den Wasserzähler. Der Empfang der Empfangsbestätigung stellt das zweite Auslöseereignis EA2 dar, wonach die Zeitabstände ZA' zwischen den Sendewiederholungen wieder zu Zeitabständen ZA verlängert und keine zusätzlichen Empfangsfenster 4a mehr geöffnet werden, um wieder energiesparend zu senden.

Ferner stellt der Empfang des Warnsignals durch die Zentraleinheit 2 ein erstes Auslöseereignis EA1 seitens der Zentraleinheit 2 dar, bei dem eine erhöhte Übertragungssicherheit seitens der Zentraleinheit 2 benötigt wird. Die Zentraleinheit 2 sendet hierbei die Information 3, die nun die Steuerdaten zum Abschalten der Wasserversorgung enthalten, nach erfolgtem ersten Auslöseereignis EA1 mit verkürzten Zeitabständen ZA', d. h. erhöhten Sendewiederholungen, an den Wasserzähler. Zusätzlich öffnet die Zentraleinheit 2 zusätzliche Empfangsfenster 4a, um die Empfangsbereitschaft für die Empfangsbestätigung des Wasserzählers zu verbessern. Mit dem Eintritt des zweiten Auslöseereignisses EA2, dem Empfang der Empfangsbestätigung im Empfangsfenster 4 bzw. im zusätzlichen Empfangsfenster 4a, werden die Zeitabstände ZA' wieder verlängert. Ferner werden auch keine zusätzlichen Empfangsfenster 4a mehr geöffnet.

Zweckmäßigerweise kann auch eine Lookup-Tabelle vorgesehen sein, die in einem Speicher der Zentraleinheit 2 und/oder in einem Speicher der Messeinheit hinterlegt wird. In der Lookup-Tabelle können Erwartungswerte für Parameter, die z. B. aus früher übermittelten Informationen 3 ableitbar sind, gespeichert sein, wie z. B. Temperatur, Zählerstand, Verbrauch oder dergleichen. Dabei können die Erwartungswerte der Lookup-Tabelle zur Überprüfung der übertragenen Information 3 bzw. der Parameter oder Parameterdaten herangezogen werden, wobei eine bestimmte Abweichung der übermittelten Information 3 bzw. Parameter von den Erwartungswerten der Lookup-Tabelle ein erstes Auslöseereignis EA1 darstellen kann. Beispielsweise kann durch den Vergleich eines erwarteten Gasverbrauchs und eines erfassten weitaus höheren Gasverbrauchs auf eine Unregelmäßigkeit geschlossen werden, die z. B. durch eine Leckage begründet sein kann.

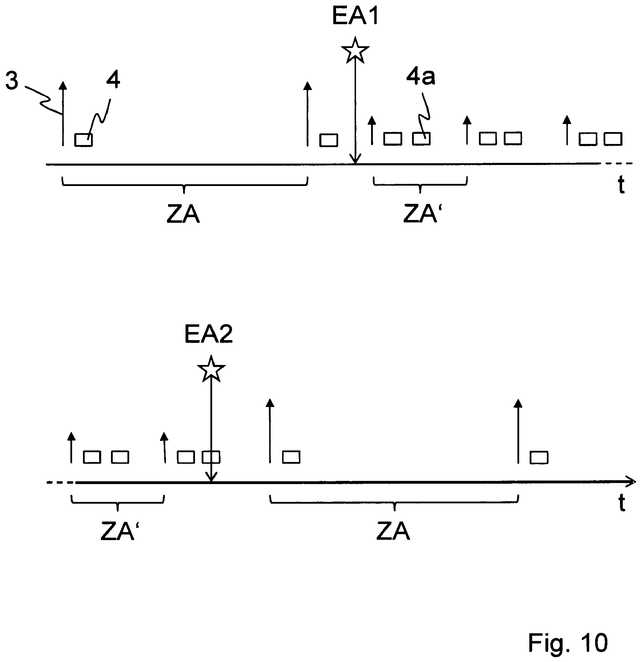

Fig. 10 zeigt eine besonders vorteilhafte Ausgestaltung der vorliegenden Erfindung. Dabei werden durch den Eintritt des ersten Auslöseereignisses EA1 die Zeitabstände ZA zwischen den Sendewiederholungen der Information 3 verkürzt und es wird ein zusätzliches Empfangsfenster 4a zum Empfang der Empfangsbestätigung geöffnet. Gleichzeitig wird jedoch die Sendeleistung verringert, insbesondere um Energie zu sparen. Anschließend können durch den Eintritt des zweiten Auslöseereignisses EA2 die Zeitabstände ZA' zwischen den Sendewiederholungen wieder verlängert und keine zusätzlichen Empfangsfenster 4a mehr geöffnet werden. Gleichzeitig wird die Sendeleistung aufgrund des Eintritts des zweiten Auslöseereignisses EA2 wieder erhöht. In vorteilhafter Weise können dadurch die Übertragungssicherheit verbessert und der Energieverbrauch optimiert werden. Beispielsweise kann somit ein Verbrauchszähler 1, welcher durch ein festes Kommunikationsnetz (fixed network) bzw. Verbrauchszählersystem ausgelesen wird, im Falle einer Netzwerkstörung, z. B. durch Naturkatastrophen, Stromausfälle oder dergleichen, in einen sogenannten Drive-by-Modus übergehen. Der Drive-by Modus ist zwischen dem Eintritt des ersten Auslöseereignisses EA1 und zweiten Auslöseereignisses EA2 aktiv. Der Verbrauchszähler 1wird dabei über einen mobilen Datensammler im Drive-by-Modus ausgelesen. Um das zu ermöglichen bzw. zu erleichtern, wird das Sendeintervall erhöht. Infolgedessen wird jedoch die Batterie des Verbrauchszählers 1 mehr beansprucht. Indem die Sendeleistung des Verbrauchszählers 1 verringert wird, wird jedoch weniger Strom verbraucht und somit die Batterie nicht zusätzlich belastet und/oder geschont bzw. deren Lebensdauer gar verlängert.

Als erstes Auslöseereignis EA1 kann insbesondere eine Parameterabweichung innerhalb des jeweiligen Verbrauchszählersystems dienen (Spannungsabfall oder dergleichen). Als zweites Auslöseereignis EA2 können z. B. der Empfang der Empfangsbestätigung und/oder das Auslösen eines Timers (z. B. ein Zeitschalter, welcher nach einer festlegbaren Zeitspanne auslöst) und/oder die erfolgreiche Verbindung zu einem anderen Übertragungssystem (z. B. Funksystem oder Netzwerk) vorgesehen sein.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Verbrauchszähler
- 1a: Kommunikationsmodul
- 1b: Antenne
- 2: Zentraleinheit
- 2a: Kommunikationsmodul
- 2b: Antenne
- 3: Information
- 4: Empfangsfenster
- 4a: (zusätzliches) Empfangsfenster
- 5: Wohneinheit
- 6: Schaltzentrale
- 7: Versorgungsleitung
- 8: Breaker

- ZA: Zeitabstand
- ZA': (verkürzter) Zeitabstand
- EA1: erstes Auslöseereignis
- EA2: zweites Auslöseereignis

## Patentansprüche

1. Verfahren zum Betrieb eines Versorgungssystems, insbesondere eines Verbrauchszählersystems, zur Verbesserung der Übertragungssicherheit bei Eintritt eines ersten Auslöseereignisses (EA1), wobei das Versorgungssystem
eine Messeinheit, insbesondere einen Verbrauchszähler (1), und
eine Zentraleinheit (2) umfasst, wobei
eine Information (3) zum Betrieb des Versorgungssystems über ein Kommunikationsnetz per Funk zwischen der Zentraleinheit (2) und der Messeinheit übertragen wird,
die Information (3) wiederholt in bestimmten Zeitabständen (ZA) von der Zentraleinheit (2) und/oder der Messeinheit gesendet wird,
die Messeinheit bzw. die Zentraleinheit (2) die Information (3) empfängt und anschließend eine Empfangsbestätigung generiert und diese an die Zentraleinheit (2) bzw. die Messeinheit sendet, wobei
die Zentraleinheit (2) bzw. die Messeinheit nach dem Senden der Information (3) ein Empfangsfenster (4) mit bestimmter Zeitdauer zum Empfang der Empfangsbestätigung öffnet,
durch den Eintritt des ersten Auslöseereignisses (EA1) die Zeitabstände (ZA) zwischen den Sendewiederholungen der Information (3) verkürzt werden und/oder ein zusätzliches Empfangsfenster (4a) zum Empfang der Empfangsbestätigung geöffnet wird,
durch den Eintritt eines zweiten Auslöseereignisses (EA2) die Zeitabstände (ZA') zwischen den Sendewiederholungen verlängert und/oder keine zusätzlichen Empfangsfenster (4a) geöffnet werden, und
die Sendeleistung zum Senden der Information (3) aufgrund des Eintritts des ersten Auslöseereignisses (EA1) erhöht und aufgrund des zweiten Auslöseereignisses (EA2) wieder verringert wird.

2. Verfahren zum Betrieb eines Versorgungssystems, insbesondere eines Verbrauchszählersystems, zur Verbesserung der Übertragungssicherheit bei Eintritt eines ersten Auslöseereignisses (EA1), wobei das Versorgungssystem
eine Messeinheit, insbesondere einen Verbrauchszähler (1), und
eine Zentraleinheit (2) umfasst, wobei
eine Information (3) zum Betrieb des Versorgungssystems über ein Kommunikationsnetz per Funk zwischen der Zentraleinheit (2) und der Messeinheit übertragen wird,
die Information (3) wiederholt in bestimmten Zeitabständen (ZA) von der Zentraleinheit (2) und/oder der Messeinheit gesendet wird,
die Messeinheit bzw. die Zentraleinheit (2) die Information (3) empfängt und anschließend eine Empfangsbestätigung generiert und diese an die Zentraleinheit (2) bzw. die Messeinheit sendet, wobei
die Zentraleinheit (2) bzw. die Messeinheit nach dem Senden der Information (3) ein Empfangsfenster (4) mit bestimmter Zeitdauer zum Empfang der Empfangsbestätigung öffnet,
durch den Eintritt des ersten Auslöseereignisses (EA1) die Zeitabstände (ZA) zwischen den Sendewiederholungen der Information (3) verkürzt werden und/oder ein zusätzliches Empfangsfenster (4a) zum Empfang der Empfangsbestätigung geöffnet wird,
durch den Eintritt eines zweiten Auslöseereignisses (EA2) die Zeitabstände (ZA') zwischen den Sendewiederholungen verlängert und/oder keine zusätzlichen Empfangsfenster (4a) geöffnet werden, und
die Zeitdauer des oder der Empfangsfenster(s) (4, 4a) aufgrund des Eintritts des ersten Auslöseereignisses (EA1) erhöht und aufgrund des Eintritts des zweiten Auslöseereignisses (EA2) wieder verringert wird.

3. Verfahren zum Betrieb eines Versorgungssystems, insbesondere eines Verbrauchszählersystems, zur Verbesserung der Übertragungssicherheit bei Eintritt eines ersten Auslöseereignisses (EA1), wobei das Versorgungssystem
eine Messeinheit, insbesondere einen Verbrauchszähler (1), und
eine Zentraleinheit (2) umfasst, wobei
eine Information (3) zum Betrieb des Versorgungssystems über ein Kommunikationsnetz per Funk zwischen der Zentraleinheit (2) und der Messeinheit übertragen wird,
die Information (3) wiederholt in bestimmten Zeitabständen (ZA) von der Zentraleinheit (2) und/oder der Messeinheit gesendet wird,
die Messeinheit bzw. die Zentraleinheit (2) die Information (3) empfängt und anschließend eine Empfangsbestätigung generiert und diese an die Zentraleinheit (2) bzw. die Messeinheit sendet, wobei
die Zentraleinheit (2) bzw. die Messeinheit nach dem Senden der Information (3) ein Empfangsfenster (4) mit bestimmter Zeitdauer zum Empfang der Empfangsbestätigung öffnet,
durch den Eintritt des ersten Auslöseereignisses (EA1) die Zeitabstände (ZA) zwischen den Sendewiederholungen der Information (3) verkürzt werden und/oder ein zusätzliches Empfangsfenster (4a) zum Empfang der Empfangsbestätigung geöffnet wird,
durch den Eintritt eines zweiten Auslöseereignisses (EA2) die Zeitabstände (ZA') zwischen den Sendewiederholungen verlängert und/oder keine zusätzlichen Empfangsfenster (4a) geöffnet werden, und
durch den Eintritt des ersten Auslöseereignisses (EA1) die Sendeleistung zum Senden der Information (3) verringert und aufgrund des Eintritts des zweiten Auslöseereignisses (EA2) wieder erhöht wird.

4. Verfahren zum Betrieb eines Versorgungssystems, insbesondere eines Verbrauchszählersystems, zur Verbesserung der Übertragungssicherheit bei Eintritt eines ersten Auslöseereignisses (EA1), wobei das Versorgungssystem
eine Messeinheit, insbesondere einen Verbrauchszähler (1), und
eine Zentraleinheit (2) umfasst, wobei
eine Information (3) zum Betrieb des Versorgungssystems über ein Kommunikationsnetz per Funk zwischen der Zentraleinheit (2) und der Messeinheit übertragen wird,
die Information (3) wiederholt in bestimmten Zeitabständen (ZA) von der Zentraleinheit (2) und/oder der Messeinheit gesendet wird,
die Messeinheit bzw. die Zentraleinheit (2) die Information (3) empfängt und anschließend eine Empfangsbestätigung generiert und diese an die Zentraleinheit (2) bzw. die Messeinheit sendet, wobei
die Zentraleinheit (2) bzw. die Messeinheit nach dem Senden der Information (3) ein Empfangsfenster (4) mit bestimmter Zeitdauer zum Empfang der Empfangsbestätigung öffnet,
durch den Eintritt des ersten Auslöseereignisses (EA1) die Zeitabstände (ZA) zwischen den Sendewiederholungen der Information (3) verkürzt werden und ein zusätzliches Empfangsfenster (4a) zum Empfang der Empfangsbestätigung geöffnet wird, und
durch den Eintritt eines zweiten Auslöseereignisses (EA2) die Zeitabstände (ZA') zwischen den Sendewiederholungen verlängert und keine zusätzlichen Empfangsfenster (4a) geöffnet werden.

5. Verfahren nach mindestens einem der vorhergehenden Ansprüche, **dadurch gekennzeichnet, dass** das zweite Auslöseereignis (EA2) der Empfang der Empfangsbestätigung ist und/oder das Auslösen eines Timers und/oder die erfolgreiche Verbindung zu einem anderen Übertragungssystem ist.

6. Verfahren nach mindestens einem der vorhergehenden Ansprüche, **dadurch gekennzeichnet, dass** die Messeinheit und/oder die Zentraleinheit (2) derart konfiguriert sind, dass diese über mehrere Funksysteme und/oder mehrere Frequenzkanäle senden und empfangen können.

7. Verfahren nach mindestens einem der vorhergehenden Ansprüche, **dadurch gekennzeichnet, dass** das Verkürzen der Zeitabstände (ZA) zwischen den Sendewiederholungen und/oder das Öffnen zusätzlicher Empfangsfenster (4a) und/oder das Verändern, insbesondere das Erhöhen oder Verringern, der Sendeleistung und/oder der Zeitdauer des Empfangsfensters (4, 4a) nur für die Zeitdauer eines bestimmten Sendezeitraums mit erhöhter Sendewiederholung zwischen dem ersten (EA1) und zweiten Auslöseereignisses (EA2) erfolgt.

8. Verfahren nach Anspruch 7, **dadurch gekennzeichnet, dass** zwischen dem Eintritt des ersten Auslöseereignisses (EA1) und dem Eintritt des zweiten Auslöseereignisses (EA2) mehrere Sendezeiträume mit erhöhter Sendewiederholung vorgesehen sind und zwischen den Sendezeiträumen mit erhöhter Sendewiederholung Sendepausen und/oder Sendezeiträume ohne erhöhte Sendewiederholung vorgesehen sind.

9. Verfahren nach mindestens einem der vorhergehenden Ansprüche, **dadurch gekennzeichnet, dass** die Zentraleinheit (2) und/oder die Messeinheit eine Frequenzkanalauswahl zur Informationsübertragung durchführt.

10. Verfahren nach Anspruch 9, **dadurch gekennzeichnet, dass** die Messeinheit und/oder die Zentraleinheit (2) eine Frequenzkanalbewertung, vorzugsweise anhand des Signal-zu-Rausch-Verhältnisses (SNR) und/oder anhand des Nutzsignal-zu-Störsignal-Verhältnisses (SIR), durchführen und die Frequenzkanalbewertung zur Frequenzkanalauswahl herangezogen wird.

11. Verfahren nach mindestens einem der vorhergehenden Ansprüche, **dadurch gekennzeichnet, dass** eine Lookup-Tabelle vorgesehen ist, in welcher Erwartungswerte für eine übermittelte Information (3) und/oder Parameter gespeichert sind und die Lookup-Tabelle zur Überprüfung der Information (3) und/oder Parameter herangezogen wird, wobei eine bestimmte Abweichung der übermittelten Information (3) und/oder der Parameter von den Erwartungswerten der Lookup-Tabelle ein erstes Auslöseereignis (EA1) darstellt.

12. Verfahren nach mindestens einem der vorhergehenden Ansprüche, **dadurch gekennzeichnet, dass** der Zeitabstand zwischen dem ersten Auslöseereignis (EA1) und dem Beginn der Übertragung der Information (3) und/oder die verkürzten Zeitabstände (ZA') anhand eines definierten Musters oder pseudo-zufällig festlegbar sind.

13. Verfahren nach mindestens einem der vorhergehenden Ansprüche, **dadurch gekennzeichnet, dass** eine Vielzahl von Messeinheiten und/oder Zentraleinheiten (2) vorgesehen sind.

## Claims

1. Method for operating a supply system, in particular a consumption meter system, for improving the transfer reliability when a first trigger event (EA1) occurs, wherein the supply system comprises
a measuring unit, in particular a consumption meter (1), and
a central unit (2), wherein
information (3) for operating the supply system is transferred via a communication network by radio between the central unit (2) and the measuring unit,
the information (3) is transmitted repeatedly at specific time intervals (ZA) by the central unit (2) and/or the measuring unit,
the measuring unit or the central unit (2) receives the information (3) and then generates a receipt confirmation, which it transmits to the central unit (2) or the measuring unit respectively, wherein
the central unit (2) or the measuring unit, after transmitting the information (3), opens a receive window (4) of a certain time length for receiving the receipt confirmation,
as a result of the first trigger event (EA1) occurring, the time intervals (ZA) between the repeat transmissions of the information (3) are shortened, and/or an additional receive window (4a) for receiving the receipt confirmation is opened,
as a result of a second trigger event (EA2) occurring, the time intervals (ZA') between the repeat transmissions are lengthened, and/or no additional receive windows (4a) are opened, and
the transmit power for transmitting the information (3) is increased as a result of the first trigger event (EA1) occurring, and decreased again as a result of the second trigger event (EA2) occurring.

2. Method for operating a supply system, in particular a consumption meter system, for improving the transfer reliability when a first trigger event (EA1) occurs, wherein the supply system comprises
a measuring unit, in particular a consumption meter (1), and
a central unit (2), wherein
information (3) for operating the supply system is transferred via a communication network by radio between the central unit (2) and the measuring unit,
the information (3) is transmitted repeatedly at specific time intervals (ZA) by the central unit (2) and/or the measuring unit,
the measuring unit or the central unit (2) receives the information (3) and then generates a receipt confirmation, which it transmits to the central unit (2) or the measuring unit respectively, wherein
the central unit (2) or the measuring unit, after transmitting the information (3), opens a receive window (4) of a certain time length for receiving the receipt confirmation,
as a result of the first trigger event (EA1) occurring, the time intervals (ZA) between the repeat transmissions of the information (3) are shortened, and/or an additional receive window (4a) for receiving the receipt confirmation is opened,
as a result of a second trigger event (EA2) occurring, the time intervals (ZA') between the repeat transmissions are lengthened, and/or no additional receive windows (4a) are opened, and
the time length of the receive window(s) (4, 4a) is increased as a result of the first trigger event (EA1) occurring, and decreased again as a result of the second trigger event (EA2) occurring.

3. Method for operating a supply system, in particular a consumption meter system, for improving the transfer reliability when a first trigger event (EA1) occurs, wherein the supply system comprises
a measuring unit, in particular a consumption meter (1), and
a central unit (2), wherein
information (3) for operating the supply system is transferred via a communication network by radio between the central unit (2) and the measuring unit,
the information (3) is transmitted repeatedly at specific time intervals (ZA) by the central unit (2) and/or the measuring unit,
the measuring unit or the central unit (2) receives the information (3) and then generates a receipt confirmation, which it transmits to the central unit (2) or the measuring unit respectively, wherein
the central unit (2) or the measuring unit, after transmitting the information (3), opens a receive window (4) of a certain time length for receiving the receipt confirmation,
as a result of the first trigger event (EA1) occurring, the time intervals (ZA) between the repeat transmissions of the information (3) are shortened, and/or an additional receive window (4a) for receiving the receipt confirmation is opened,
as a result of a second trigger event (EA2) occurring, the time intervals (ZA') between the repeat transmissions are lengthened, and/or no additional receive windows (4a) are opened, and
the transmit power for transmitting the information (3) is reduced as a result of the first trigger event (EA1) occurring, and is increased again as a result of the second trigger event (EA2) occurring.

4. Method for operating a supply system, in particular a consumption meter system, for improving the transfer reliability when a first trigger event (EA1) occurs, wherein the supply system comprises
a measuring unit, in particular a consumption meter (1), and
a central unit (2), wherein
information (3) for operating the supply system is transferred via a communication network by radio between the central unit (2) and the measuring unit,
the information (3) is transmitted repeatedly at specific time intervals (ZA) by the central unit (2) and/or the measuring unit,
the measuring unit or the central unit (2) receives the information (3) and then generates a receipt confirmation, which it transmits to the central unit (2) or the measuring unit respectively, wherein
the central unit (2) or the measuring unit, after transmitting the information (3), opens a receive window (4) of a certain time length for receiving the receipt confirmation,
as a result of the first trigger event (EA1) occurring, the time intervals (ZA) between the repeat transmissions of the information (3) are shortened, and an additional receive window (4a) for receiving the receipt confirmation is opened, and
as a result of a second trigger event (EA2) occurring, the time intervals (ZA') between the repeat transmissions are lengthened, and no additional receive windows (4a) are opened.

5. Method according to at least one of the preceding claims, **characterized in that** the second trigger event (EA2) is the receiving of the receipt confirmation and/or the triggering of a timer and/or the successful connection to another transmission system.

6. Method according to at least one of the preceding claims, **characterized in that** the measuring unit and/or the central unit (2) are configured such that they can transmit and receive over a plurality of radio systems and/or a plurality of frequency channels.

7. Method according to at least one of the preceding claims, **characterized in that** the shortening of the time intervals (ZA) between the repeat transmissions, and/or the opening of additional receive windows (4a) and/or the change, in particular the increase or decrease, in the transmit power and/or in the time length of the receive window (4, 4a), takes place only for the duration of a certain transmit time period, in which repeat transmission is higher, between the first trigger event (EA1) and the second trigger event (EA2).

8. Method according to Claim 7, **characterized in that** a plurality of transmit time periods in which repeat transmission is higher are provided between the first trigger event (EA1) occurring and the second trigger event (EA2) occurring, and transmit pauses and/or transmit time periods in which repeat transmission is not higher are provided between the transmit time periods in which repeat transmission is higher.

9. Method according to at least one of the preceding claims, **characterized in that** the central unit (2) and/or the measuring unit select (s) the frequency channel for the information transfer.

10. Method according to Claim 9, **characterized in that** the measuring unit and/or the central unit (2) perform(s) a frequency channel assessment, preferably on the basis of the signal-to-noise ratio (SNR) and/or on the basis of the signal-to-interference ratio (SIR), and the frequency channel assessment is used for selecting the frequency channel.

11. Method according to at least one of the preceding claims, **characterized in that** a lookup table is provided, in which are stored expected values for conveyed information (3) and/or parameters, and the lookup table is used for checking the information (3) and/or parameters, wherein a certain divergence of the conveyed information (3) and/or of the parameters from the expected values in the lookup table constitutes a first trigger event (EA1).

12. Method according to at least one of the preceding claims, **characterized in that** the time interval between the first trigger event (EA1) and the start of the transfer of the information (3) and/or the shortened time intervals (ZA') can be set on the basis of a defined pattern or pseudo-randomly.

13. Method according to least one of the preceding claims, **characterized in that** a multiplicity of measuring units and/or central units (2) are provided.

## Revendications

1. Procédé d'exploitation d'un système d'alimentation, en particulier d'un système de compteur de consommation, pour améliorer la sécurité de transmission en cas d'apparition d'un premier événement déclencheur (EA1), le système d'alimentation comprenant
une unité de mesure, en particulier un compteur de consommation (1), et
une unité centrale (2), dans lequel
une information (3) concernant l'exploitation du système d'alimentation est transmise par radio sur un réseau de communication entre l'unité centrale (2) et l'unité de mesure,
l'information (3) est envoyée de manière répétée par l'unité centrale (2) et/ou l'unité de mesure à des intervalles de temps déterminés (ZA),
l'unité de mesure ou l'unité centrale (2), respectivement, reçoit l'information (3) et génère ensuite un accusé de réception et l'envoie à l'unité centrale (2) ou à l'unité de mesure, respectivement, dans lequel
l'unité centrale (2) ou l'unité de mesure, respectivement, ouvre après l'envoi de l'information (3) une fenêtre de réception (4) d'une durée déterminée pour recevoir l'accusé de réception,
du fait de l'apparition du premier événement déclencheur (EA1) les intervalles de temps (ZA) entre les retransmissions de l'information (3) sont raccourcis et/ou une fenêtre de réception supplémentaire (4a) est ouverte pour recevoir l'accusé de réception,
du fait de l'apparition d'un deuxième événement déclencheur (EA2) les intervalles de temps (ZA') entre les retransmissions sont rallongés et/ou aucune fenêtre de réception supplémentaire (4a) n'est ouverte, et
la puissance d'émission pour envoyer l'information (3) est augmentée en raison de l'apparition du premier événement déclencheur (EA1) et est à nouveau diminuée en raison du deuxième événement déclencheur (EA2).

2. Procédé d'exploitation d'un système d'alimentation, en particulier d'un système de compteur de consommation, pour améliorer la sécurité de transmission en cas d'apparition d'un premier événement déclencheur (EA1), le système d'alimentation comprenant
une unité de mesure, en particulier un compteur de consommation (1), et
une unité centrale (2), dans lequel
une information (3) concernant l'exploitation du système d'alimentation est transmise par radio sur un réseau de communication entre l'unité centrale (2) et l'unité de mesure,
l'information (3) est envoyée de manière répétée par l'unité centrale (2) et/ou l'unité de mesure à des intervalles de temps déterminés (ZA),
l'unité de mesure ou l'unité centrale (2), respectivement, reçoit l'information (3) et génère ensuite un accusé de réception et l'envoie à l'unité centrale (2) ou à l'unité de mesure, respectivement, dans lequel
l'unité centrale (2) ou l'unité de mesure, respectivement, ouvre après l'envoi de l'information (3) une fenêtre de réception (4) d'une durée déterminée pour recevoir l'accusé de réception,
du fait de l'apparition du premier événement déclencheur (EA1) les intervalles de temps (ZA) entre les retransmissions de l'information (3) sont raccourcis et/ou une fenêtre de réception supplémentaire (4a) est ouverte pour recevoir l'accusé de réception,
du fait de l'apparition d'un deuxième événement déclencheur (EA2) les intervalles de temps (ZA') entre les retransmissions sont rallongés et/ou aucune fenêtre de réception supplémentaire (4a) n'est ouverte, et
la durée de la ou des fenêtre (s) de réception (4, 4a) est augmentée en raison de l'apparition du premier événement déclencheur (EA1) et est à nouveau diminuée en raison de l'apparition du deuxième événement déclencheur (EA2).

3. Procédé d'exploitation d'un système d'alimentation, en particulier d'un système de compteur de consommation, pour améliorer la sécurité de transmission en cas d'apparition d'un premier événement déclencheur (EA1), le système d'alimentation comprenant
une unité de mesure, en particulier un compteur de consommation (1), et
une unité centrale (2), dans lequel
une information (3) concernant l'exploitation du système d'alimentation est transmise par radio sur un réseau de communication entre l'unité centrale (2) et l'unité de mesure,
l'information (3) est envoyée de manière répétée par l'unité centrale (2) et/ou l'unité de mesure à des intervalles de temps déterminés (ZA),
l'unité de mesure ou l'unité centrale (2), respectivement, reçoit l'information (3) et génère ensuite un accusé de réception et l'envoie à l'unité centrale (2) ou à l'unité de mesure, respectivement, dans lequel
l'unité centrale (2) ou l'unité de mesure, respectivement, ouvre après l'envoi de l'information (3) une fenêtre de réception (4) d'une durée déterminée pour recevoir l'accusé de réception,
du fait de l'apparition du premier événement déclencheur (EA1) les intervalles de temps (ZA) entre les retransmissions de l'information (3) sont raccourcis et/ou une fenêtre de réception supplémentaire (4a) est ouverte pour recevoir l'accusé de réception,
du fait de l'apparition d'un deuxième événement déclencheur (EA2) les intervalles de temps (ZA') entre les retransmissions sont rallongés et/ou aucune fenêtre de réception supplémentaire (4a) n'est ouverte, et
du fait de l'apparition du premier événement déclencheur (EA1), la puissance d'émission pour envoyer l'information (3) est diminuée, et est à nouveau augmentée en raison de l'apparition du deuxième événement déclencheur (EA2).

4. Procédé d'exploitation d'un système d'alimentation, en particulier d'un système de compteur de consommation, pour améliorer la sécurité de transmission en cas d'apparition d'un premier événement déclencheur (EA1), le système d'alimentation comprenant
une unité de mesure, en particulier un compteur de consommation (1), et
une unité centrale (2), dans lequel
une information (3) concernant l'exploitation du système d'alimentation est transmise par radio sur un réseau de communication entre l'unité centrale (2) et l'unité de mesure,
l'information (3) est envoyée de manière répétée par l'unité centrale (2) et/ou l'unité de mesure à des intervalles de temps déterminés (ZA),
l'unité de mesure ou l'unité centrale (2), respectivement, reçoit l'information (3) et génère ensuite un accusé de réception et l'envoie à l'unité centrale (2) ou à l'unité de mesure, respectivement, dans lequel
l'unité centrale (2) ou l'unité de mesure, respectivement, ouvre après l'envoi de l'information (3) une fenêtre de réception (4) d'une durée déterminée pour recevoir l'accusé de réception,
du fait de l'apparition du premier événement déclencheur (EA1) les intervalles de temps (ZA) entre les retransmissions de l'information (3) sont raccourcis et/ou une fenêtre de réception supplémentaire (4a) est ouverte pour recevoir l'accusé de réception, et
du fait de l'apparition d'un deuxième événement déclencheur (EA2) les intervalles de temps (ZA') entre les retransmissions sont rallongés et/ou aucune fenêtre de réception supplémentaire (4a) n'est ouverte.

5. Procédé selon au moins l'une des revendications précédentes, **caractérisé en ce que** le deuxième événement déclencheur (EA2) est la réception de l'accusé de réception et/ou le déclenchement d'un temporisateur et/ou la connexion réussie avec un autre système de transmission.

6. Procédé selon au moins l'une des revendications précédentes, **caractérisé en ce que** l'unité de mesure et/ou l'unité centrale (2) est/sont configurée(s) de façon à pouvoir émettre et recevoir par l'intermédiaire de plusieurs systèmes radio et/ou de plusieurs canaux de fréquence.

7. Procédé selon au moins l'une des revendications précédentes, **caractérisé en ce que** le raccourcissement des intervalles de temps (ZA) entre les retransmissions et/ou l'ouverture de fenêtres de réception supplémentaires (4a) et/ou la modification, en particulier l'augmentation ou la diminution, de la puissance d'émission et/ou de la durée de la fenêtre de réception (4, 4a) n'ont lieu que pendant la durée d'une période d'envoi déterminée avec retransmission accrue entre le premier (EA1) et le deuxième événement déclencheur (EA2).

8. Procédé selon la revendication 7, **caractérisé en ce qu'**entre l'apparition du premier événement déclencheur (EA1) et l'apparition du deuxième événement déclencheur (EA2), plusieurs périodes d'envoi avec retransmission accrue sont prévues, et entre les périodes d'envoi avec retransmission accrue, des pauses d'envoi et/ou des périodes d'envoi sans retransmission accrue sont prévues.

9. Procédé selon au moins l'une des revendications précédentes, **caractérisé en ce que** l'unité centrale (2) et/ou l'unité de mesure effectue une sélection de canal de fréquence pour la transmission d'informations.

10. Procédé selon la revendication 9, **caractérisé en ce que** l'unité de mesure et/ou l'unité centrale (2) effectuent une évaluation de canal de fréquence, de préférence à l'aide du rapport signal/bruit (SNR) et/ou à l'aide du rapport signal utile/signal parasite (SIR), et l'évaluation de canal de fréquence est utilisée pour la sélection du canal de fréquence.

11. Procédé selon au moins l'une des revendications précédentes, **caractérisé en ce qu'**une table de consultation est prévue dans laquelle sont stockées des valeurs attendues pour une information transmise (3) et/ou un paramètre transmis, et la table de consultation est utilisée pour vérifier l'information (3) et/ou le paramètre, un écart déterminé de l'information transmise (3) et/ou du paramètre transmis par rapport aux valeurs attendues de la table de consultation représentant un premier événement déclencheur (EA1).

12. Procédé selon au moins l'une des revendications précédentes, **caractérisé en ce que** l'intervalle de temps entre le premier événement déclencheur (EA1) et le début de la transmission de l'information (3) et/ou les intervalles de temps raccourcis (ZA') peuvent être fixés à l'aide d'un schéma défini ou de manière pseudoaléatoire.

13. Procédé selon au moins l'une des revendications précédentes, **caractérisé en ce qu'**une pluralité d'unités de mesure et/ou d'unités centrales (2) est prévue.
